# EUROPEAN PATENT SPECIFICATION

(11) **EP 3 128 416 B1**
(45) Date of publication and mention of the grant of the patent: **27.02.2019**
(21) Application number: 14888015.6
(22) Date of filing: 23.10.2014
(51) Int. Cl.: G06F 9/44, H04L 12/24

(54) **SDN APPLICATION INTEGRATION, MANAGEMENT AND CONTROL METHOD, SYSTEM AND DEVICE**
SND-ANWENDUNG-INTEGRATION, VERWALTUNGS- UND STEUERUNGSVERFAHREN, SYSTEM UND VORRICHTUNG
PROCÉDÉ, SYSTÈME ET DISPOSITIF D'INTÉGRATION, DE GESTION ET DE COMMANDE D'APPLICATION DE SDN

(30) Priority: 04.04.2014 CN 201410136052
(43) Date of publication of application: 08.02.2017
(73) Proprietor: ZTE Corporation, Shenzhen, Guangdong 518057 (CN)
(72) Inventor: WANG, Dong, Shenzhen, Guangdong 518057 (CN)
(74) Representative: HGF Limited
(86) International application number: PCT/CN2014/089241
(87) International publication number: WO 2015/149505

(56) References cited:
- CN-A- 101 626 485
- CN-A- 102 244 814
- CN-A- 103 095 565
- CN-A- 103 236 945
- US-A1- 2007 083 625
- SEUNG-IK LEE ETRI KOREA (REPUBLIC OF): "Output text of Y.SDN-FR Framework of software-defined networking (For Consent);TDxx (SG13RGM)", ITU-T DRAFT ; STUDY PERIOD 2013-2016, INTERNATIONAL TELECOMMUNICATION UNION, GENEVA ; CH, vol. 14/13, 21 February 2014 (2014-02-21), pages 1-22, XP044071695, [retrieved on 2014-02-21]
- Onf: "SDN Architecture Overview", , 12 December 2013 (2013-12-12), XP055347526, Retrieved from the Internet: URL:https://www.opennetworking.org/images/ stories/downloads/sdn-resources/technical- reports/SDN-architecture-overview-1.0.pdf [retrieved on 2017-02-20]
- Sarwar Raza ET AL: "Northbound Interfaces Working Group Open Networking Foundation North Bound Interface Working Group (NBI---WG) Charter Executive Summary History, and relationship to NBI Study Group", , 10 June 2013 (2013-06-10), XP055348032, Retrieved from the Internet: URL:https://www.opennetworking.org/images/ stories/downloads/working-groups/charter-n bi.pdf [retrieved on 2017-02-21]

## Description

### Technical Field

The present invention relates to the field of communication, in particular to a Software Defined Networking (SDN) application integration, management and control method, system and device.

### Background

SDN is a new network technology which has emerged in recent years and mainly has the features of control and forwarding separation, network opening programmability, and software and hardware separation. SDN enables the traditional communication network devices to be liberated from dedicated hardware binding and to be developed towards a direction of general-purpose hardware platforms plus customized software, network function virtualization, network management simplification and network deployment automation are implemented through open programmable interfaces, and as compared with the traditional network function implementation and engineering implementation, device costs, labor costs and deployment time are greatly reduced.

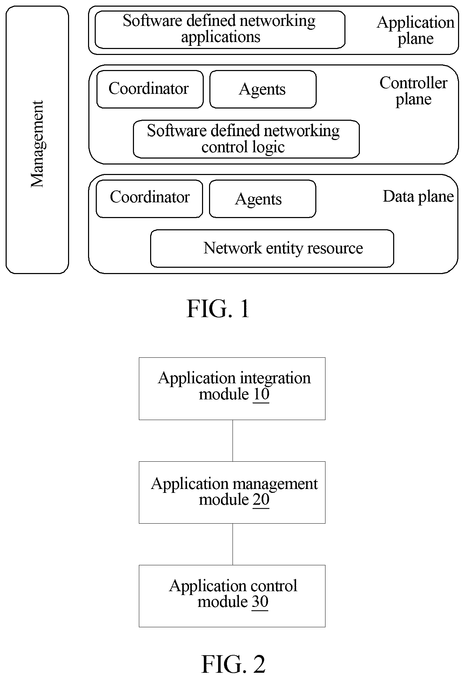

FIG. 1 is an architecture diagram of software defined networking according to the related art. As illustrated in FIG. 1, software defined network technology, as divided according to architecture layers, is basically divided into three layers from top to bottom, i.e., an application plane or application layer, a controller plane or a controller layer, and a data plane or a datapath layer. At present, the industry has more discussions about the controller plane and the data plane, and is doing or has already done a great number of standardization tasks. However, at present, there are a few of discussions about the application plane and how application integration, management, control, orchestration and the like are performed inside, and the relative progress is comparatively slow.

Although a management function which vertically penetrates through all planes is sketched in the architecture in FIG. 1, how the application plane is managed is not described and refined at present. Up to now, in the latest standards and relevant solutions, how the application plane is managed is not described and refined, this causes SDN to have lacks in aspects such as usability, manageability and operability, it is not beneficial to the healthy development of the SDN industry, and especially a congenital handicap exists in aspects of how to quickly establish SDN developer communities and attract a great number of SDN application developers.

Regardless of the Open Networking Foundation (ONF) standard organization or the Open Day Light (ODL) open source organization, the SDN application plane defined at present is mainly positioned to provide network applications and functions such as network service orchestration. The SDN application plane performs network resource application and service orchestration according to an application request of a user, herein upwards, the SDN application plane and an external user provide Application Programming Interface (API) calling (arctic interface) by means of Representational State Transfer (REST) to realize customized application functions for external clients, so as to realize virtualized network application functions; and downwards, the SDN and an SDN controller provide network API interface calling (northbound interface) by means of REST to apply to the SDN controller plane for resources, so as to realize virtualized network service functions.

At present, even though from the perspective of the SDN application plane, most related technological discussions and standardization tasks focus on the aspect of northbound interface between the SDN application plane and the SDN controller plane. However, during actual application of SDN, a service provided by SDN to the outside is mainly realized through an interface (i.e., arctic interface) between the SDN application plane and the external upper plane application thereof. At present, demands and functions related to the arctic interface have not been explored yet.

At present, there is no effective solution for solving the problem of how to integrate, manage and control an SDN application in the SDN application plane in the related art.

The document "Output text of Y.SDN-YR Framework of software-defined networking (for consent)" provides the framework of software-defined networking.

The document "SDN architecture overview" provides the high-level view of the software-defined networking architecture.

The document "Open Networking Foundation North Bound Interface Working Group (NBI-WG) Charter" describes that the proliferation of SDN controllers each with unique APIs creates an over-abundance of programmatic interfaces that network service vendors, orchestration systems and application vendors must develop to in order to serve diverse SDN use cases.

### Summary of the Invention

The embodiments of the present invention provide an SDN application integration, management and control method, system and device, so as to at least solve the problem that an SDN application cannot be integrated, managed and controlled in the related art.

The above problem is solved by the system according to claim 1 and the method according to claim 11. Further embodiments and improvements are provided in the dependent claims.

Provided is a SDN application integration, management and control system in a SDN application plane, including: an application integration module configured to integrate an SDN application in the SDN application plane, wherein integrating an SDN application includes at least one of registering, deregistering and updating an SDN application and reconstructing a plurality of SDN applications; an application management module configured to manage the SDN application in the SDN application plane; and an application control module configured to be aware of and monitor the SDN application in the SDN application plane.

Alternatively, the application integration module includes: an application registration unit configured to register an SDN application to the SDN application plane in response to a request for registering the SDN application and apply to a bottom controller plane coordinator for resources; and/or update an SDN application in response to a request for updating the SDN application; and/or deregister an SDN application from the SDN application plane in response to a request for deregistering the SDN application, and inform the bottom controller plane coordinator to release corresponding resources.

Alternatively, the application integration module further includes: an application coordination unit configured to coordinate resources of a plurality of SDN applications according to an application coordination policy and a coordination algorithm when the plurality of SDN applications are concurrent.

Alternatively, the application integration module further includes: an application selection unit configured to compare a plurality of options according to a predetermined policy when the plurality of options exist, and select resources of the SDN application/applications according to a comparison result.

Alternatively, the application integration module further includes: an application simulation unit configured to simulate an SDN application which requests to be registered according to the a request for registering the SDN application and the applied resources, and generate evaluation data of the SDN applications; and/or simulate a situation of each option when a plurality of options exist and generate evaluation data of the plurality of options.

Alternatively, information after the SDN application is successfully registered includes at least one of the following: Unified Application Identifier (UAID), AliasName, AppType, Descriptor, KeyWords, Status, App_Parameter and Handler.

Alternatively, the application management module includes: an application discovery unit configured to search for an SDN application in the SDN application plane in response to a request for discovering the SDN application; or search for the SDN application in the SDN application plane and display a search result; and/or an application announcement unit configured to announce information about registration, deregistration and update of the SDN application.

Alternatively, the application discovery unit is configured to perform search according to information during application registration, wherein the information during application registration includes at least one of the following: UAID, AliasName, Descriptor and KeyWords.

Alternatively, the application announcement unit is configured to announce the information about the registration, deregistration and update of the SDN application, herein, with respect to the registration of the SDN application, the announced information includes at least one of the following: UAID, AliasName, AppType, Descriptor, KeyWords, Status, App_Parameter and Handler.

Alternatively, the application control module includes: an application awareness unit configured to be aware of a situation of a current called SDN application, including providing attribute and statistic information of the current called SDN application; and/or an application monitoring unit configured to monitor an application situation and application status of the SDN application, herein the application situation includes at least one of the following: a total number of applications, a total number of concurrent applications, an application calling frequency and a number of applications in each application status; and the application status includes at least one of the following: registered, idle, active, suspended and deregistered. Alternatively, the application awareness unit is configured to be aware of a situation of a current called active SDN application, herein the attribute of the SDN application includes at least one of the following: UAID, Instance ID, AppType, Resource, VM, Volume, Bandwidth, Latency, Jitter and Buffer.

Also provided is a SDN application integration, management and control device, including any one of the above systems.

Also provided is a SDN application integration, management and control method, including: integrating an SDN application in an SDN application plane in response to a request for integrating the SDN application, wherein integrating an SDN application includes at least one of registering, deregistering and updating an SDN application and reconstructing a plurality of SDN applications; managing the SDN application in the application plane; and being aware of and monitoring the SDN application in the SDN application plane.

Alternatively, integrating an SDN application in the SDN application plane includes at least one of the following: registering an SDN application to the SDN application plane in response to a request for registering the SDN application and applying to a bottom controller plane coordinator for resources; updating an SDN application in response to a request for updating the SDN application; and deregistering an SDN application from the SDN application plane in response to a request for deregistering the SDN application, and informing the bottom controller plane coordinator to release corresponding resources.

Alternatively, the method further includes: coordinating resources of a plurality of SDN applications according to an application coordination policy and a coordination algorithm when the plurality of SDN applications are concurrent.

Alternatively, the method further includes: comparing a plurality of options according to a predetermined policy when the plurality of options exist, and selecting resources of the SDN application/applications according to a comparison result.

Alternatively, the method further includes: simulating an SDN application which requests to be registered according to the request for registering the SDN application and the applied resources, and generating evaluation data of the SDN application; or simulating a situation of each option when a plurality of options exist and generating evaluation data of the plurality of options.

Alternatively, managing the SDN application in the SDN application plane includes: searching for an SDN application in the SDN application plane in response to a request for discovering the SDN application; or searching for the SDN application in the SDN application plane and displaying a search result; and/or announcing information about registration, deregistration and update of the SDN application.

Alternatively, being aware of and monitoring the SDN application in the SDN application plane includes: being aware of a situation of a current called SDN application, including providing attribute and statistic information of the current called SDN application; and/or monitoring an application situation and application status of the SDN application, herein the

application situation includes at least one of the following: a total number of applications, a total number of concurrent applications, an application calling frequency and a number of applications in each application status; and the application status includes at least one of the following: registered, idle, active, suspended and deregistered.

Through the embodiments of the present invention, the application integration module integrates an SDN application in the SDN application plane, herein integrating an SDN application includes at least one of: registering, deregistering and updating the SDN application and reconstructing a plurality of SDN applications; the application management module manages the SDN application in the SDN application plane; and the application control module is aware of and monitors the SDN application in the SDN application plane, thereby implementing the management of the SDN application.

### Brief Description of Drawings

The drawings described here are used for providing further understanding about the present invention and constitute part of the present application. The exemplary embodiments of the present invention and the description thereof are used for explaining the present invention instead of improperly limiting the present invention. In the drawings:
FIG. 1 illustrates an architecture diagram of software defined networking according to the related art;
FIG. 2 illustrates a structural diagram of an SDN application integration, management and control system according to the embodiment of the present invention;
FIG. 3 illustrates a structural diagram of an alternative application integration module according to the embodiment of the present invention;
FIG. 4 illustrates a structural diagram of an alternative application management module according to the embodiment of the present invention;
FIG. 5 illustrates a structural diagram of an alternative application control module according to the embodiment of the present invention;
FIG. 6 illustrates a flowchart of an SDN application integration, management and control method according to the embodiment of the present invention;
FIG. 7 illustrates an architecture diagram of an SDN reference system according to the embodiment of the present invention;
FIG. 8 illustrates a structural diagram of an alternative SDN application integration, management and control device according to the embodiment of the present invention; and
FIG. 9 illustrates a schematic diagram of a component relation of an SDN application integration, management and control device according to the embodiment of the present invention.

### Specified Embodiments

The present invention will be described below in detail with reference to the drawings in combination with the embodiments. It needs to be stated that the embodiments in the present application and the features in the embodiments may be mutually combined under the situation of no conflict.

According to the embodiment of the present invention, the present invention provides an SDN application integration, management and control system. It can be expected that the system may be implemented through a computer program unit, the computer program unit may be stored in a storage medium and a processor may execute the computer program unit. For a distributed computing scenario such as cloud computing, the program unit may be stored in a plurality of storage mediums and may be cooperatively executed by different processors.

FIG. 2 illustrates a structural diagram of an SDN application integration, management and control system according to the embodiment of the present invention. As illustrated in FIG. 2, the system mainly includes an application integration module 10, an application management module 20 and an application control module 30. The application integration module 10 is configured to integrate an SDN application in an application plane, herein integrating an SDN application includes at least one of registering, deregistering and updating an SDN application and reconstructing a plurality of SDN applications; the application management module 20 is configured to manage the SDN application in the application plane; and the application control module 30 is configured to be aware of and monitor the SDN application in the application plane.

Through the embodiment of the present invention, the integration, management and control of SDN are implemented.

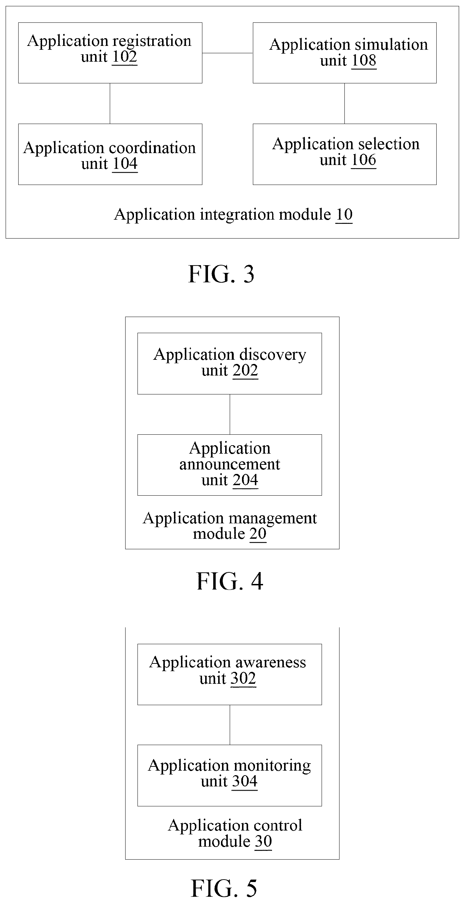

FIG. 3 illustrates a structural diagram of an alternative application integration module according to the embodiment of the present invention. The application integration module 10 in the embodiment of the present invention will be described below with reference to FIG. 3.

In one implementation mode of the embodiment of the present invention, as illustrated in FIG. 3, the application integration module 10 may include: an application registration unit 102 configured to register an SDN application to the application plane in response to a request for registering the SDN application and apply to a bottom controller plane coordinator for resources; and/or update an SDN application in response to a request for updating the SDN application; and/or deregister an SDN application from the application plane in response to a request for deregistering the SDN application, and inform the bottom controller plane coordinator to release corresponding resources.

In one implementation mode of the embodiment of the present invention, as illustrated in FIG. 3, the application integration module 10 may further include: an application coordination unit 104 configured to coordinate resources of a plurality of SDN applications according to an application coordination policy and a coordination algorithm when the plurality of SDN applications are concurrent.

In one implementation mode of the embodiment of the present invention, as illustrated in FIG. 3, the application integration module 10 may further include: an application selection unit 106 configured to compare a plurality of options according to a predetermined policy when the plurality of options exist, and select resources of the SDN application/applications according to a comparison result.

In one implementation mode of the embodiment of the present invention, as illustrated in FIG. 3, the application integration module 10 may further include: an application simulation unit 108 configured to simulate an SDN application which requests to be registered according to the request for registering the SDN application and the applied resources, and generate evaluation data of the SDN application; and/or simulate a situation of each option when a plurality of options exist and generate evaluation data of the plurality of options.

Alternatively, information after the SDN application is successfully registered includes at least one of the following: Unified Application Identifier (UAID), AliasName, AppType, Descriptor, KeyWords, Status, App_Parameter, Handler, etc.

FIG. 4 illustrates a structural diagram of an alternative application management module according to the embodiment of the present invention. As illustrated in FIG. 4, the application management module 20 may include: an application discovery unit 202 configured to search for an SDN application in the application plane in response to a request for discovering the SDN application; or search for the SDN application in the application plane and display a search result; and/or an application announcement unit 204 configured to announce information about registration, deregistration and update of the SDN application.

Alternatively, the application discovery unit 202 is configured to perform search according to information during application registration, herein the information during application registration includes at least one of the following: UAID, AliasName, Descriptor and KeyWords.

Alternatively, the application announcement unit 204 is configured to announce the information about the registration, deregistration and update of the SDN application, wherein, with respect to the registration of the SDN application, the announced information includes at least one of the following: UAID, AliasName, AppType, Descriptor, KeyWords, Status, App_Parameter and Handler.

FIG. 5 illustrates a structural diagram of an alternative application control module according to the embodiment of the present invention. As illustrated in FIG. 5, the application control module 30 may include: an application awareness unit 302 configured to be aware of a situation of a current called SDN application, including providing attribute and statistic information of the current called SDN application; and/or an application monitoring unit 304 configured to monitor an application situation and application status of the SDN application.

Alternatively, the application situation include at least one of the following: the total number of applications, the total number of concurrent applications, an application calling frequency and the number of applications in each application status; and the application status includes at least one of the following: registered, idle, active, suspended and deregistered.

Alternatively, the application awareness unit 302 may be configured to be aware of a situation of a current called active SDN application, wherein the attribute of the SDN application includes at least one of the following: UAID, Instance ID, AppType, Resource, VM, Volume, Bandwidth, Latency, Jitter and Buffer.

According to the embodiment of the present invention, corresponding to the device, the present invention further provides an SDN application integration, management and control device, herein the device may include any one of the above systems provided by the embodiment of the present invention. The device is not repetitively described here.

In one implementation mode of the embodiment of the present invention, the device may include a storage medium and a processor, the device may be implemented through a computer program unit, the storage medium may store the computer program unit and the processor may execute the computer program unit.

With respect to the communication between the device and other devices or apparatuses and systems, communication interfaces may be selected by one skilled in the art according to actual application and thus are not repetitively described here in this embodiment of the present invention.

According to the embodiment of the present invention, corresponding to the device and the apparatus, the present invention provides an SDN application integration, management and control method. It can be expected that the method provided by the embodiment of the present invention may be implemented by compiling a computer program unit.

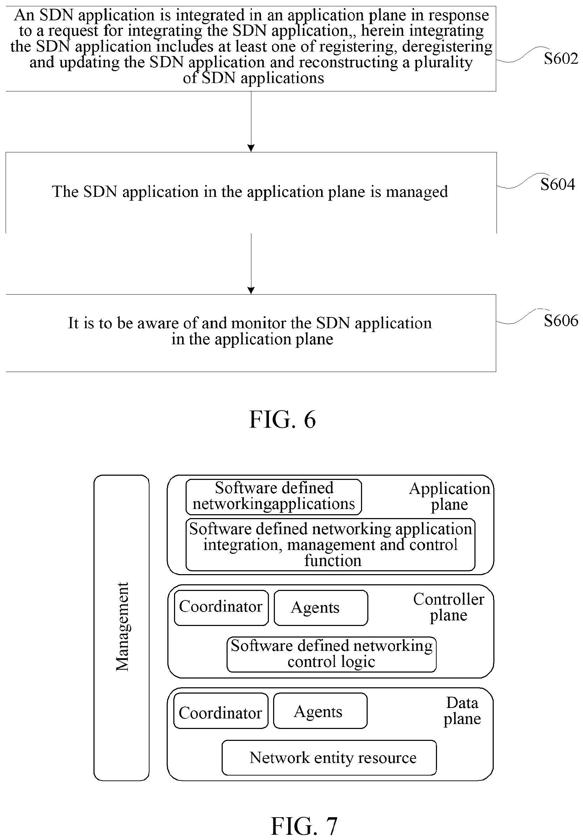

FIG. 6 illustrates a flowchart of an SDN application integration, management and control method according to the embodiment of the present invention. As illustrated in FIG. 6, the method mainly includes step S602 to step S606.

In step S602, an SDN application is integrated in an application plane in response to a request for integrating the SDN application, herein integrating the SDN application includes at least one of registering, deregistering and updating the SDN application and reconstructing a plurality of SDN applications.

In step S604, the SDN application in the application plane is managed.

In step S606, it is to be aware of and monitor the SDN application in the application plane.

Through the embodiment of the present invention, the integration, management and control of the SDN application are implemented.

In the embodiment of the present invention, there is no sequence for the steps. As long as there is an SDN application in the SDN application plane, the SDN application may be managed and may also be aware of and monitored. The integration of the SDN application may also occur at any time and is not limited to before step S604 and step S606.

In one alternative implementation mode of the embodiment of the present invention, step S602 may include at least one of: registering an SDN application to the application plane in response to a request for registering the SDN application and applying to a bottom controller plane coordinator for resources; updating an SDN application in response to a request for updating the SDN application; and deregistering an SDN application from the application plane in response to a request for deregistering the SDN application, and informing the bottom controller plane coordinator to release corresponding resources.

In one implementation mode of the embodiment of the present invention, step S602 may further include: coordinating a resource conflict of a plurality of SDN applications according to an application coordination policy and a coordination algorithm when the plurality of SDN applications are concurrent.

In one implementation mode of the embodiment of the present invention, step S602 may further include: comparing a plurality of options according to a predetermined policy when the plurality of options exist, and selecting resources of the SDN application/applications according to a comparison result.

In one implementation mode of the embodiment of the present invention, step S602 may further include: simulating an SDN application which requests to be registered according to the request for registering the SDN application and the applied resources, and generating evaluation data of the SDN application; or simulating a situation of each option when a plurality of options exist and generating evaluation data of the plurality of options.

It needs to be stated that the above-mentioned implementation modes may be separately performed and may also be performed in a combined manner, and no limitation is on that in the embodiment of the present invention.

In one implementation mode of the embodiment of the present invention, step S604 may include: searching for an SDN application in the application plane in response to a request for discovering the SDN application; or searching for the SDN application in the application plane and displaying a search result; and/or announcing information about registration, deregistration and update of the SDN application.

In one implementation mode of the embodiment of the present invention, step S604 may include: being aware of a situation of a current called SDN application, including providing attribute and statistic information of the current called SDN application; and/or monitoring an application situation and application status of the SDN application.

Alternatively, the application situations include at least one of the following: the total number of applications, the total number of concurrent applications, an application calling frequency and the number of applications in each application status; and the application status includes at least one of the following: registered, idle, active, suspended and deregistered.

The alternative embodiments of the present invention will be described below.

### Alternative embodiment 1

According to an alternative embodiment of the present invention, the present invention provides an SDN application integration, management and control system. The system includes an application portal subsystem, an application registration subsystem, an application coordination subsystem, an application selection subsystem, an application simulation subsystem, an application announcement subsystem, an application database subsystem, an application awareness subsystem, an application monitoring subsystem, an application discovery subsystem, an application search subsystem and an application orchestration subsystem. Therein,
the application portal subsystem is configured to perform man-machine interaction such as application registration, application selection, application announcement, application monitoring, application discovery and application orchestration and information display for a user.

The application registration subsystem is configured to register new applications to an integration management database, and apply to a bottom application coordinator for computing/network/storage resources; if the resource application succeeds, the registration succeeds; and if the resource application fails, the registration fails and error codes of failure may be selectively provided according to an actual situation.

Each successfully-registered new application should include UAID (automatically generated 64-bit unsigned number), AliasName (man-machine readable character string), AppType (unsigned integer), Descriptor (man-machine readable character string), KeyWords (character string), Status (enumerated type, initial status=registered, a status thereafter may be migrated between several statuses according to the actual situation of the application, such as registered, idle, active, suspended and deregistered), App_Parameter (pointer parameter), Handler (pointer function), etc. A registered application may be deregistered through application deregistration, and after the application is deregistered, the bottom application coordinator should be informed to release the applied computing/network/storage resources; and when the application is registered, KeyWords information should be provided and saved in the application integration management database, and when the application is deregistered, the corresponding KeyWords information should be deleted from the application integration management database.

The application coordination subsystem is configured to apply to a bottom controller plane coordinator for computing, storage and network resources needed by a newly-added application according to an application registration request, and uniformly coordinate a resource conflict, which occurs when a plurality of applications are concurrent, in the application plane according to an application coordination policy and a coordination algorithm.

The application selection subsystem is configured to provide mutual comparisons and options for selecting by a user when there are various options of methods, paths or economic costs.

The application simulation subsystem is configured to perform sampling simulation in advance on a registered application request according to the application registration request and the computing, storage and network resources provided by the bottom plane, so as to provide pre-evaluation references for corresponding service quality, network paths and economic costs, etc.

The application announcement subsystem is configured to announce information of a successfully registered newly-added application and a successfully deregistered original application; and for the newly-added applications, the announcement information should include information such as function description, handler, parameter introduction and keywords. Further, the announcement may be performed by a way of unicasting or application plane multicasting.

The application database subsystem is configured to access information such as application attribute, application keyword, application status, monitoring information, statistic information, application policy and operation log.

The application awareness subsystem is configured to be aware of a situation of a current called specific application which is active, including providing specific attribute, statistic information and the like of each application. The specific attribute of each application includes: UAID, Instance ID, AppType, Resource, VM, Volume, Bandwidth, Latency, Jitter, Buffer, etc.

The application monitoring subsystem is configured to monitor statistic situations and corresponding statuses of all applications which are online and offline currently. The application situation includes: the total number of applications, the total number of concurrent applications, an application calling frequency, etc.; and the application status includes: registered, idle, active, suspended, deregistered, etc.

The application discovery subsystem is configured to, in order to prevent an application from being repetitively registered when the application is registered for the first time, or for a user who needs to understand and use the application and a programmable application interface thereof after the application is registered, discover the application capability provided by a network currently and acquire a corresponding programming implementation reference instance through a designated client or dedicated programming simulation tool. The application discovery may be indexed based on information during application registration, such as UAID, AliasName, Descriptor and KeyWords.

The application search subsystem is configured to search for a target application such as an application capability and corresponding programming method in the application integration management database according to index information such as UAID, AliasName, Descriptor and KeyWord in response to an application discovery request of a user, and return a search result; the search result includes success and application information when succeeding, failure and a cause code of failure, etc.; and application search may also provide associated information of a historical version of a related method, etc.

The application orchestration subsystem is configured to reconstruct a plurality of existing applications in the application plane to form new applications (notes: application orchestration may be viewed as a high-plane application form of bottom plane service orchestration, the implementation thereof may be performed directly or indirectly based on service orchestration and here an indirect mode is used).

### Alternative embodiment 2

The alternative embodiment of the present invention further provides an SDN application integration, management and control device. The device includes an application portal module, an application registration module, an application coordination module, an application selection module, an application simulation module, an application announcement module, an application database module, an application awareness module, an application monitoring module, an application discovery module, an application search module and an application orchestration module. Therein,
the application portal module is configured to, together with the application registration module, the application selection module, the application announcement module, the application discovery module, the application monitoring module, the application orchestration module and the like, perform man-machine interaction and information display.

The application registration module is configured to register a newly-added application, save relevant registered application information into the application database module and announce the registered newly-added application information to a user through the application announcement module.

The application coordination module is configured to read a coordination policy from the application database module and apply a corresponding coordination algorithm to perform uniform coordination when the application registration module applies to a bottom controller plane coordinator for computation, storage and network resources needed by the newly-added application and a resource conflict occurs in a plurality of concurrent applications.

The application selection module is configured to provide an application comparison and an interactive selection to the user through the application portal module when various options of methods, paths, economic costs and the like possibly appear; and when it is difficult to intuitively make a selection, the application simulation module may be enabled to assist in judging.

The application simulation module is configured to enable the application selection module to perform service sampling and simulation in advance when there are various options possibly but the superiorities of specific methods, paths, economic costs and the like cannot be judged, so as to provide reference information such as pre-evaluation references for corresponding service quality, network paths and economic costs, and to provide the reference information to the application selection module such that the user makes an interactive selection at the application portal module.

The application announcement module is configured to announce the registered/deregistered application information to the user.

The application database module is configured to access information such as application attribute, application keyword, application status, monitoring information, statistic information, application policy, and operation log.

The application awareness module is configured to be aware of a certain type of a current called specific application and a corresponding situation and status thereof, including providing specific attribute, statistic information and the like of each application. The application information awared by the application awareness module is transmitted to the monitoring module and is saved in the application database module.

The application monitoring module is configured to monitor a use and calling situation of the application information, statistically collect and process the relevant information, display the information in the application portal module and save the information in the application database module.

The application discovery module is configured to transmit an application information search request by the user to the application search module through the application portal module.

The application search module is configured to search for the registered application information in the application database module in response to the search request from the application discovery module and according to search information carried by the search request.

The application orchestration module is configured to reconstruct a plurality of registered applications in the application plane to form new applications. The application orchestration module searches for an application keyword through the application discovery module and the application search module to search for an available registered application from the application database module; when a plurality of application options occur, the application selection module and the application simulation module are called to assist in selecting; and after the combination and orchestration of the new applications are successfully completed, relevant information is displayed on the application portal module.

### Alternative embodiment 3

FIG. 7 illustrates an architecture diagram of an SDN reference system according to the embodiment of the present invention. As illustrated in FIG. 7, an SDN application integration, management and control function is added at an SDN application plane. The function can gather SDN applications developed by SDN application developers and SDN individual developers and perform centralized management and control. This provides a basic platform and convenient condition for carrying out centralized transaction, use, evaluation and the like of SDN applications in SDN application stores based on this system.

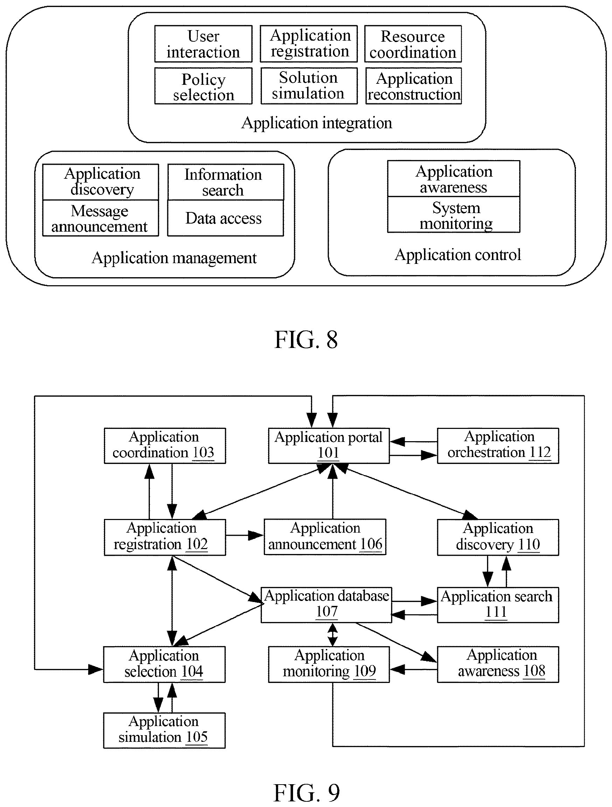

FIG. 8 illustrates a structural diagram of an alternative SDN application integration, management and control device according to the embodiment of the present invention. As illustrated in FIG. 8, the device mainly includes an application integration module, an application management module and an application control module, herein the application integration module is responsible for interaction with a user, registration of an application, coordination of resources, selection of policy, simulation of a solution, and reconstruction of applications (including using an external third-party application, etc.); the application management module is responsible for discovery of an application, search of information, announcement of a message and access of data; and the application control module is responsible for awareness of an application and monitoring of a system.

Alternatively, a relevant function may be implemented by a corresponding function component, herein the application integration module includes user interaction (application portal), application registration, resource coordination (application coordination) policy selection (application selection), solution simulation (application simulation) and application reconstruction; the application management module includes application discovery, information search (application search), message announcement (application announcement) and data access (application database); and the application control module includes application awareness and system monitoring (application monitoring).

Alternative implementation modes of all function components will be described below.

### I. Application integration module

User interaction (also called as application portal): as an initial entrance of a user, it provides an interface for man-machine interaction such as application registration, application selection, application announcement, application discovery, application monitoring and application orchestration and information display.

Application registration: a user, as an application owner, requests to add a new application into an SDN application integration management platform through the application portal, these newly-added applications are registered to an application database through an application registration process, and computing/network/storage resources are applied to a bottom application coordinator; if the resource application succeeds, the registration succeeds; and if the resource application fails, the registration fails, and error codes of failure may be selectively provided according to a specific situation. After application registration succeeds, application attribute, keyword information and the like are saved in the application database.

Alternatively, each successfully registered new application includes: UAID (automatically-generated 64-bit unsigned number), AliasName (man-machine readable character string), AppType (unsigned integer), Descriptor (man-machine readable character string), KeyWords (character string), Status (enumerated type, initial status=registered, a status thereafter may be migrated between several statuses according to an actual situation of the application, such as registered, idle, active, suspended and deregistered), App Parameter (pointer parameter), Handler (pointer function), etc. A successfully-registered application may be subsequently classified, updated and upgraded as required. Update mainly solves bugs existing in the original application, and performs performance improvement and optimization, etc., without introducing new function features; and upgrade further refers to introducing new function features in addition to updating the application. Correspondingly, when the life cycle of a registered application is ended or the owner of the application requests to delete the application, application deregistration is performed. The application deregistration is performed also through the application registration process. After the application is deregistered, the application coordinator informs the coordinator of the bottom controller plane to release the applied computing/network/storage resources and delete the related information of the application from the application integration management database.

Resource coordination (also called as application coordination): it is to apply to a bottom controller plane coordinator for computing, storage and network resources needed by a newly-added application according to an application registration request, and a resource conflict which occurs when a plurality of applications are concurrent is uniformly coordinated in the application plane according to an application coordination policy and a coordination algorithm.

Policy selection (also called as application selection): when there are various options of methods, paths or economic costs, mutual comparisons and options are provided for selecting by a user; and the user may perform automatic offline selection or interactive online selection according to a preconfigured policy, and the selection process and result are presented at the application portal or saved in log data of the application integration management database.

Solution simulation (also called as application simulation): service sampling and simulation are performed in advance on a registered application request according to the application registration request and the situation of computing, storage and network resources provided by the bottom plane, so as to obtain pre-evaluation reference data of corresponding service quality, network paths and economic costs needed by the application.

Application reconstruction: a plurality of existing applications are reconstructed on an application plane to form new applications.

### II. Application management module

Application discovery: application capabilities provided by a network currently are searched and a corresponding programming implementation reference instance is acquired through a designated remote client application (such as application software client or dedicated programming simulation tool installed on mobile phone/PC/tablet computer) or the application portal website of the SDN application integration management platform through an application discovery process, so as to prevent an application from being repetitively registered when the application is registered by an application owner for the first time, or for a user who needs to understand and use the application and a programmable application interface thereof after the application is registered. The application discovery process may be indexed based on information during application registration, such as UAID, AliasName, Descriptor and KeyWords.

Information search (application search): a target application such as application, application capability and corresponding programming method is searched in the application integration management database according to one or more pieces of index information such as UAID, AliasName, Descriptor and KeyWords in response to an application discovery request of a user, and a search result is returned; the search result includes success and application information when succeeding, failure and a cause code of failure, etc.; and application search may also provide associated information of a historical version of a related application, application capability, calling method, etc.

Message announcement (also called as application announcement): once a newly-added application is successfully registered, the successfully-registered newly-added application is announced through an application announcement process, and the announcement information is presented through the application portal of the SDN application integration management platform. For a newly-added application, announcement information should include information such as application AliasName, description information, handler, attribute parameter and keyword. If the registered application is successfully deregistered, the original application which is successfully deregistered is announced through the application announcement process. For the deregistered application, the announcement information only needs to include the application AliasName. Further, the announcement may be performed by a way of unicasting or application plane multicasting; and the announcement information may also be presented to a designated remote client application (such as an application software client installed on mobile phone/PC/tablet computer) through a communication channel.

Data access (also called as application database): it is a database for accessing information such as application attribute, application keyword, application status, monitoring information, statistic information, application policy and operation log.

### III. Application control module

Application awareness: it is configured to be aware of a situation of a certain type of a current called specific application which is active, including providing specific attribute, statistic information and the like of each application. The specific attribute of each application includes: UAID, Instance ID, AppType, Resource, VM, Volume, Bandwidth, Latency, Jitter, Buffer, etc.

System monitoring (also called as application monitoring): it is configured to monitor statistic information and corresponding statistic statuses of all applications which are online and offline currently. The statistic information of the applications includes: the total number of applications, the total number of concurrent applications, an application calling frequency, the number of applications in each application status, etc.; and the application status includes: registered, idle, active, suspended, deregistered, etc.

FIG. 9 illustrates a schematic diagram of a component relation of an SDN application integration, management and control device according to the embodiment of the present invention. As illustrated in FIG. 9, specific function components include application portal 101, application registration 102, application coordination 103, application selection 104, application simulation 105, application announcement 106, application database 107, application awareness 108, application monitoring 109, application discovery 110, application search 111 and application orchestration 112, herein application port 101, application registration 102, application coordination 103, application announcement 106, application database 107, application awareness 108, application monitoring 109, application discovery 110 and application search 111 are necessary function components for forming the SDN application integration, management and control device, and whether a function component such as application selection 104, application simulation 105, or application orchestration 112 exists depends on whether there is a relevant demand and whether a relevant function is enabled.

Through the functional components for SDN application integration, management and control, functions such as addition, deletion, update and upgrade, search, query, ranking, evaluation, superposition and reconstruction of SDN applications can be successfully implemented.

In the alternative embodiment, application portal 101 is used as an initial entrance of a user of the SDN application integration, management and control system, performs man-machine interaction with application registration 102, application selection 104, application announcement 106, application monitoring 109, application discovery 110, application orchestration 112 and the like, and provides an information display interface.

Further, the information display and man-machine interaction may be implemented by the way of command line, graphical interface, etc.

In the alternative embodiment, an application owner submits a new application adding request through application portal 101, and application registration 102 receives new application adding request information from application portal 101, establishes an application attribute session and applies to the coordinator of the control plane for computing/network/storage resources through application coordination 103. If the resource application succeeds, the registration application of the newly-added application succeeds. In one aspect, registration success information is displayed on application portal 101, and in another aspect, information of the newly-added application is released through application announcement 106 and related information such as the application attribute and the like is saved in application database 107; and if the resource application fails, the registration application of the newly-added application fails, and a corresponding failure error code is returned according to a specific situation (refer to definition of error code of HTTP, for example, 200 is defined as success, 40x is defined as failure and causes thereof, etc.), information of registration failure and causes thereof are displayed on application portal 101.

Further, each successfully-registered new application should include UAID (automatically-generated 64-bit unsigned number), AliasName (man-machine readable character string), AppType (unsigned integer), Descriptor (man-machine readable character string), KeyWords (character string), Status (enumerated type, initial status=registered, a status thereafter may be migrated between several statuses according to an actual situation of an application, such as registered, idle, active, suspended and deregistered), App Parameter (pointer parameter), Handler (pointer function), etc. For a data structure defined by using standard C language, refer to the following:

```
      enum APP_STATUS {Registered, Idle, Active, Suspended, Deregistered};
      structAppAttribute {
      unsigned long Uaid;
      string AliasName;
      unsigned int AppType;
      string Descriptor;
      string KeyWords;
      APPSTATUS Status;
      char *AttrParameters_1, *AttrParameters_2, ..., *AttrParameters_m;
      char *handler_1, *handler_2,..., *handler_n,;
      };
```

Further, a successfully-registered application may be subsequently classified, updated and upgraded as required. Update mainly solves bugs existing the original application, and performs performance improvement and optimization, etc., without introducing new function features; and upgrade further refers to introducing new function features in addition to updating the application.

Further, correspondingly, when the life cycle of a registered application is ended or the owner of the application requests to delete the application, application deregistration is performed.

Further, application registration 101 also provides an application deregistration function. After a successfully-registered application is deregistered, the coordinator of the bottom controller plane should be informed through application coordination 103 to release the applied computing/network/storage resources and delete information such as a related attribute of the application from application database 107.

In the alternative embodiment, when the newly-added application is registered and there are various options of computing resources (such as server virtual machine), network resources (such as network bandwidth and reachable paths) and storage resources (such as storage spaces) acquired through application coordination 103, or when selection needs to be made since there are various options of performance indicators or economic costs formed by different combinations of these network resources, application selection 104 makes a comparison in aspects such as performance, cost and efficiency between all options such that the user can select the optimum solution. Application selection 104 uses resource information acquired from application registration 102, acquires a basis of selection from application database 107, presents a selection process and a selection result in application portal and saves the selection process and the result in log data of application database 107.

Further, the user may automatically select offline according to a policy preconfigured and saved in application database 107 or interactively select online through application portal 101; and the basis of selection may be formulated based on an existing data statistic model or a specific operation policy.

In this embodiment, when intuitive and effective data comparison effects cannot be obtained through the previous application selection 104 process, or when relevant parameters before and after loading (such as network bandwidth, network latency and network jitter before loading) need to be further obtained for prediction and evaluation, application simulation 105 needs to be enabled to perform service sampling and service loading simulation on the applied application registration request in advance according to the demand of a newly-added application for resources and the situation of the computing, storage and network resources provided by the coordinator of the bottom controller plane, so as to comprehensively evaluate whether the acquired target resources satisfy the requirements on aspects such as service quality, network path and economic cost needed by the application.

Further, application simulation 105 may construct a weighted Key Performance Indicator (KPI) evaluation system based on elements such as specific network condition (N), storage resource (S), computing resource (C), time cost (T) and economic cost (P), such that the weighted KPI evaluation system is used to evaluate an overall situation and detailed situation. For example, KPI=a×N+b×S+c×C+d×T+e×P, herein a, b, c and d are weights, a+b+c+d+e=100% and value ranges of a, b, c and d are 1%-100%; and N, S, C, T and P are respectively normalized according to scoring grades, the value range is 0-100, 0 is the lowest and 100 is the highest. Therefore, the maximum score of KPI is 100.

Further, values of weights in the KPI evaluation system algorithm may be selected according to the statistic data and operation policy and gradually optimized; and normalized values of N, S, C, T and P are relative values in corresponding fields between several candidate solutions.

In this embodiment, once a newly-added application is successfully registered, information of the successfully-registered newly-added application is announced through application announcement 106, and the announced information may be presented outwards through application portal 101.

Further, for the successfully-registered newly-added application, the announced information should include information such as AliasName, AppType, Descriptor, Handler, App_Parameter and KeyWords. Meanwhile, if a registered application is successfully deregistered, the original application which is successfully deregistered is announced through application announcement 106 too. For the deregistered application, the announced information only needs to include AliasName.

Further, the announcement may be performed by a way of unicasting or application plane multicasting; the announced information may also be presented to one or more designated remote client applications (such as an application software client installed on mobile phone/PC/tablet computer) through communication.

In this embodiment, application database 107 is configured to be a database for accessing information such as application attribute, application keyword, application status, monitoring information, statistic information, application policy and operation log. Application database 107 saves a newly-added application coming from application registration 102 and information such as application attribute, application keyword and application status which are to be used by application search 111, provides application policy selection for application selection 104and saves the operation log, and saves monitoring information and statistic information coming from application awareness 108 and application monitoring 109.

In this embodiment, once a newly-added application is successfully registered, its relevant application attribute(s) is/are successfully added into application database 107 and the application is active, application awareness 108 may be aware of the current calling situation and provide the specific attribute, statistic information and the like of the application to application monitoring 109 module to perform further processing such as summarization, analysis and refining. A specific attribute of the application includes a parameter attribute such as UAID, Instance ID, AppType, Resource, VM, Volume, Bandwidth, Latency, Jitter and Buffer.

Further, statistics may be performed on current applications which are active based on application awareness 108, and ranking situations of the applications such as the most active application and the most inactive application in the current system may be provided.

In this embodiment, once the newly-added application is successfully registered and its relevant application attribute(s) is/are successfully added into application database 107, application monitoring 109 may monitor statistic information and application statuses of all applications which are online and offline. The statistic information of the applications includes the total number of applications, the total number of concurrent applications, application calling frequency, the number of applications in each application status, etc.; and the application status includes: registered, idle, active, suspended, deregistered, etc. Application monitoring 109 mainly acquires specific attribute information of an application which is active currently from application awareness 108 module.

Further, statistics may be performed on applications in various statuses through application monitoring 109, and ranking situations of applications in various statuses such as idle, active, suspended and deregistered applications in the current system may be provided.

In this embodiment, when the application is registered for the first time, in order to prevent the application from being repetitively registered or when another user needs to understand and use the application and a programmable application interface thereof after the application is registered, the application owner or the other user may log in the application portal 101 of the portal website of the SDN application integration, management and control platform through a designated remote client (such as a dedicated programming simulation tool installed on mobile phone/PC/tablet computer) or a universal browser to confirm whether the newly-added application has already been registered or search for the currently-registered application and the provided application capability and acquire a corresponding programming implementation reference instance, etc through the application discovery 110 process. Application discovery 110 transmits a search request containing search information to application search 111 to perform a further target search, and the search result is displayed in application portal 101.

Further, application discovery 110 may perform search based on index information such as UAID, AliasName, Descriptor and KeyWords provided during application registration.

In the alternative embodiment, application search 111 searches for a target such as a registered application, application capability and corresponding programming method in application database 107 according to one or more pieces of index information (such as UAID, AliasName, Descriptor and KeyWords), and returns a search result; the search result includes success and application information when succeeding, failure and cause code of failure, etc.; and application search may also provide associated information of a historical version of relevant application, application capability and calling method, etc. The search result is returned to application discovery 110, and application discovery 110 further displays the search result in application portal 101.

In the alternative embodiment, application orchestration 112 reconstructs a plurality of existing (successfully registered) application in the application plane to form new applications. For example, a user originally needs to develop a new application 1 (APP_1), however, it is searched through application discovery that application 2 (APP_2) and application 3 (APP_3) may partially satisfy the demand thereof, and it is found through further search that application 4 (APP 4) may make up the demand of application 2 (APP_2) and application 3 (APP_3), and finally application 2 (APP_2), application 3 (APP_3) and application 4 (APP_4) are orchestrated again (e.g., by calling APP 3 first, then calling APP 4 and finally calling APP 2) to form application 1 (APP_1). This satisfies the basic demand of the user based on the original applications in the SDN application management platform without developing a new application. Application orchestration does not involve newly adding resource demands in principle. Once a new resource demand appears, it means that the user demand cannot be satisfied through the reconstruction of the original applications.

From the above-mentioned description, it can be seen that the present invention realizes the following technical effects:
Firstly, by adding functions of integration, management and control such as application portal, application registration, application coordination, application database, application awareness, application monitoring, application discovery and application search of an SDN application, the defect that the current SDN integral architecture lacks for integration and management of the SDN application plane and the SDN application is overcome, and the manageability and operability of the SDN application are improved.

Secondly, by adopting methods such as application portal, application registration, application selection, application simulation, application announcement, application discovery and application orchestration, workloads of SDN application users and management personnel are relieved and the availability and usability of the SDN application are further improved.

Finally, through functions such as application announcement, application discovery, application search and application orchestration, repetitive development and excessive development of similar applications are effectively avoided, thus the overall use efficiency of the SDN applications is improved and the engineering costs of repetitive development are saved.

Obviously, one skilled in the art should understand that all components and all steps in the present invention may be implemented by using general-purpose computing devices, they may be integrated in a single computing device or distributed on a network consisting of a plurality of computing devices, optionally they may be implemented by using program codes executable for computing devices, and thus they may be stored in memory devices and executed by computing devices, and under certain circumstances, the illustrated or described steps may be executed through a sequence different from the sequence here, or they may be respectively manufactured into integrated circuit modules or a plurality of modules or steps thereof may be manufactured into a single integrated circuit module to implement. Therefore, the present invention is not limited to any specific combination of hardware and software.

### Industrial Applicability

As described above, the SDN application integration, management and control method, system and device provided by the embodiments of the present invention have the following beneficial effects: the defect that the current SDN integral architecture lacks for integration and management of the SDN application plane and the SDN application is overcome, and the manageability and operability of the SDN applications are improved; the workloads of SDN application users and management personnel are relieved, and the availability and usability of the SDN applications are further improved; and the overall use efficiency of the SDN applications is improved and the engineering cost of repetitive development is saved.

## Claims

1. A Software Defined Networking SDN application integration, management and control system in a SDN application plane, **characterized by** the system comprising:
an application integration module (10) configured to integrate a SDN application in the SDN application plane, wherein integrating a SDN application comprises at least one of registering, deregistering and updating a SDN application and reconstructing a plurality of SDN applications to form new applications;
an application management module (20) configured to manage the SDN application in the SDN application plane, wherein the application management module (20) comprises an application discovery unit (202), an application search, an application announcement unit (204) and an application database, wherein the application discovery unit (202) is configured to transmit an application information search request of a user to the application search;
the application search is configured to search for registered application information in the application database in response to the application information search request from the application discovery and according to search information carried by the application information search request;
the application announcement unit (204) is configured to announce information about registration, deregistration and update;
an application control module (30) configured to be aware of and monitor the SDN application in the SDN application plane.

2. The system according to claim 1, wherein the application integration module (10) comprises:
an application registration unit (102) configured to register a SDN application to the SDN application plane in response to a request for registering the SDN application and apply to a bottom controller plane coordinator for resources; and/or update a SDN application in response to a request for updating the SDN application; and/or deregister a SDN application from the SDN application plane in response to a request for deregistering the SDN application, and inform the bottom controller plane coordinator to release corresponding resources.

3. The system according to claim 2, wherein the application integration module (10) further comprises:
an application coordination unit (104) configured to coordinate resources of a plurality of SDN applications according to an application coordination policy and a coordination algorithm when the plurality of SDN applications are concurrent.

4. The system according to claim 2 or 3, wherein the application integration module (10) further comprises:
an application selection unit (106) configured to compare a plurality of options according to a predetermined policy when the plurality of options exist, and select resources of the SDN application/applications according to a comparison result.

5. The system according to claim 2, 3 or 4, wherein the application integration module (10) further comprises:
an application simulation unit (108) configured to simulate a SDN application which requests to be registered according to the request for registering the SDN application and the applied resources, and generate evaluation data of the SDN application; and/or simulate a situation of each option when a plurality of options exist and generate evaluation data of the plurality of options.

6. The system according to claim 1, wherein the application control module (30) comprises:
an application awareness unit (302) configured to be aware of a situation of a current called SDN application, including providing attribute and statistic information of the current called SDN application; and/or
an application monitoring unit (304) configured to monitor an application situation and application status of the SDN application, wherein the application situation comprises at least one of the following: a total number of applications, a total number of concurrent applications, an application calling frequency and a number of applications in each application status; and the application status comprises at least one of the following: registered, idle, active, suspended and deregistered.

7. A SDN application integration, management and control device, comprising the system according to any one of claims 1-6.

8. A Software Defined Networking SDN application integration, management and control method in a SDN application plane, **characterized by** the method comprising:
integrating a SDN application in a SDN application plane in response to a request for integrating the SDN application, wherein integrating a SDN application comprises at least one of registering, deregistering and updating a SDN application and reconstructing a plurality of SDN applications to form new applications (S602);
managing the SDN application in the SDN application plane (S604); and
being aware of and monitoring the SDN application in the SDN application plane (S606),
wherein managing the SDN application in the SDN application plane comprises:
searching for a SDN application in the SDN application plane in response to a request for discovering the SDN application; or searching for the SDN application in the SDN application plane and displaying a search result; and
announcing information about registration, deregistration and update of the SDN application.

9. The method according to claim 8, wherein integrating a SDN application in the SDN application plane comprises at least one of the following:
registering a SDN application to the SDN application plane in response to a request for registering the SDN application and applying to a bottom controller plane coordinator for resources;
updating a SDN application in response to a request for updating the SDN application; and
deregistering a SDN application from the SDN application plane in response to a request for deregistering the SDN application, and informing the bottom controller plane coordinator to release corresponding resources.

10. The method according to claim 9, wherein the method further comprises:
Coordinating resources of a plurality of SDN applications according to an application coordination policy and a coordination algorithm when the plurality of SDN applications are concurrent,
and,
wherein the method further comprises:
comparing a plurality of options according to a predetermined policy when the plurality of options exist, and selecting resources of the SDN application/applications according to a comparison result.

11. The method according to any one of claims 9-10, wherein the method further comprises:
simulating a SDN application which requests to be registered according to the request for registering the SDN application and the applied resources, and generating evaluation data of the SDN application; or
simulating a situation of each option when a plurality of options exist and generating evaluation data of the plurality of options.

12. The method according to claim 8,
wherein being aware of and monitoring the SDN application in the SDN application plane comprises:
being aware of a situation of a current called SDN application, including providing attribute and statistic information of the current called SDN application; and/or
monitoring an application situation and application status of the SDN application, wherein the application situation comprises at least one of the following: a total number of applications, a total number of concurrent applications, an application calling frequency and a number of applications in each application status; and the application status comprises at least one of the following: registered, idle, active, suspended and deregistered.

## Patentansprüche

1. System zur softwaredefinierten vernetzten Integration, Verwaltung und Steuerung einer SDN-Anwendung in einer SDN-Anwendungsebene, **dadurch gekennzeichnet, dass** das System aufweist:
ein Anwendungs-Integrationsmodul (10), das konfiguriert ist, um eine SDN-Anwendung in der SDN-Anwendungsebene zu integrieren, wobei ein Integrieren einer SDN-Anwendung mindestens ein Registrieren, Deregistrieren und Aktualisieren einer SDN-Anwendung und ein Rekonstruieren einer Mehrzahl von SDN-Anwendungen aufweist, um neue Anwendungen zu bilden;
ein Anwendungs-Verwaltungsmodul (20), das konfiguriert ist, um die SDN-Anwendung in der SDN-Anwendungsebene zu verwalten, wobei das Anwendungs-Verwaltungsmodul (20) eine Anwendungs-Erkennungseinheit (202), eine Anwendungssuche, eine Anwendungs-Meldungseinheit (204) und eine Anwendungsdatenbank aufweist, wobei die Anwendungs-Erkennungseinheit (202) konfiguriert ist, um eine Suchanforderung von Anwendungsinformationen eines Benutzers zu der Anwendungssuche zu übertragen;
die Anwendungssuche konfiguriert ist, um in Reaktion auf die Suchanforderung von Anwendungsinformationen von der Anwendungserkennung und gemäß Suchanforderungen, die von der Suchanforderung von Anwendungsinformationen übertragen werden, nach registrierten Anwendungsinformationen in der Anwendungsdatenbank zu suchen;
die Anwendungs-Meldungseinheit (204) konfiguriert ist, um Informationen über Registrierung, Deregistrierung und Aktualisierung zu melden;
ein Anwendungs-Steuerungsmodul (30), das konfiguriert ist, um die SDN-Anwendung in der SDN-Anwendungsebene zu kennen und zu überwachen.

2. System nach Anspruch 1, wobei das Anwendungs-Integrationsmodul (10) aufweist:
eine Anwendungs-Registrierungseinheit (102), die konfiguriert ist, um eine SDN-Anwendung in der SDN-Anwendungsebene in Reaktion auf eine Anforderung zur Registrierung der SDN-Anwendung zu registrieren und auf einer unteren Controller-Ebene auf einen Koordinator von Ressourcen anzuwenden; und/oder eine SDN-Anwendung in Reaktion auf eine Anforderung zum Aktualisieren der SDN-Anwendung zu aktualisieren; und/oder eine SDN-Anwendung in Reaktion auf eine Anforderung zur Deregistrierung der SDN-Anwendung aus der SDN-Anwendungsebene zu deregistrieren, und den Koordinator auf unterer Controller-Ebene zu informieren, entsprechende Ressourcen freizugeben.

3. System nach Anspruch 2, wobei das Anwendungs-Integrationsmodul (10) ferner aufweist:
eine Anwendungs-Koordinierungseinheit (104), die konfiguriert ist, um Ressourcen einer Mehrzahl von SDN-Anwendungen gemäß einer Anwendungs-Koordinierungsrichtlinie und eines Koordinierungsalgorithmus zu koordinieren, wenn die Mehrzahl von SDN-Anwendungen parallel sind.

4. System nach Anspruch 2 oder 3, wobei das Anwendungs-Integrationsmodul (10) ferner aufweist:
eine Anwendungs-Auswahleinheit (106), die konfiguriert ist, um eine Mehrzahl von Optionen gemäß einer vorbestimmten Richtlinie zu vergleichen, wenn die Mehrzahl von Optionen vorhanden ist, und Ressourcen der SDN-Anwendung/-Anwendungen gemäß einem Vergleichsergebnis auszuwählen.

5. System nach Anspruch 2, 3 oder 4, wobei das Anwendungs-Integrationsmodul (10) ferner aufweist:
eine Anwendungs-Simulationseinheit (108), die konfiguriert ist, um eine SDN-Anwendung zu simulieren, die anfordert, gemäß der Anforderung zur Registrierung der SDN-Anwendung und der angewendeten Ressourcen registriert zu werden, und Bewertungsdaten der SDN-Anwendung zu generieren; und/oder eine Situation jeder Option zu simulieren, wenn eine Mehrzahl von Optionen vorhanden ist, und Bewertungsdaten der Mehrzahl von Optionen zu generieren.

6. System nach Anspruch 1, wobei das Anwendungs-Steuerungsmodul (30) aufweist:
eine Anwendungs-Kenntniseinheit (302), die konfiguriert ist, um eine Situation einer aktuell aufgerufenen SDN-Anwendung zu kennen, einschließlich einem Bereitstellen von Attribut- und statistischen Informationen der aktuell aufgerufenen SDN-Anwendung; und/oder eine Anwendungs-Überwachungseinheit (304), die konfiguriert ist, um eine Anwendungssituation und einen Anwendungsstatus der SDN-Anwendung zu überwachen, wobei die Anwendungssituation mindestens eines von Folgendem aufweist: eine Gesamtanzahl von Anwendungen, eine Gesamtanzahl von parallelen Anwendungen, eine Anwendungs-Aufrufhäufigkeit und eine Anzahl von Anwendungen in jedem Anwendungsstatus;
und der Anwendungsstatus mindestens eines von Folgendem aufweist: registriert, inaktiv, aktiv, unterbrochen und deregistriert.

7. Vorrichtung zur Integration, Verwaltung und Steuerung einer SDN-Anwendung, aufweisend das System nach einem der Ansprüche 1 bis 6.

8. Verfahren zur softwaredefinierten vernetzten Integration, Verwaltung und Steuerung einer SDN-Anwendung in einer SDN-Anwendungsebene, **dadurch gekennzeichnet, dass** das Verfahren aufweist:
ein Integrieren einer SDN-Anwendung in einer SDN-Anwendungsebene in Reaktion auf eine Anforderung zur Integration der SDN-Anwendung, wobei ein Integrieren einer SDN-Anwendung mindestens ein Registrieren, Deregistrieren und Aktualisieren einer SDN-Anwendung und ein Rekonstruieren einer Mehrzahl von SDN-Anwendungen aufweist, um neue Anwendungen zu bilden (S602);
ein Verwalten der SDN-Anwendung in der SDN-Anwendungsebene (S604); und
ein Kennen und Überwachen der SDN-Anwendung in der SDN-Anwendungsebene (S606), wobei ein Verwalten der SDN-Anwendung in der SDN-Anwendungsebene aufweist:
ein Suchen nach einer SDN-Anwendung in der SDN-Anwendungsebene in Reaktion auf eine Anforderung zum Erkennen der SDN-Anwendung; oder ein Suchen nach der SDN-Anwendung in der SDN-Anwendungsebene und ein Anzeigen eines Suchergebnisses; und
ein Melden von Informationen über Registrierung, Deregistrierung und Aktualisierung der SDN-Anwendung.

9. Verfahren nach Anspruch 8, wobei ein Integrieren einer SDN-Anwendung in die SDN-Anwendungsebene mindestens eines von Folgendem aufweist:
ein Registrieren einer SDN-Anwendung in der SDN-Anwendungsebene in Reaktion auf eine Anforderung zum Registrieren der SDN-Anwendung und Anwenden auf einen Koordinator für Ressourcen auf einer unteren Controller-Ebene;
ein Aktualisieren einer SDN-Anwendung in Reaktion auf eine Anforderung zum Aktualisieren der SDN-Anwendung; und
ein Deregistrieren einer SDN-Anwendung aus der SDN-Anwendungsebene in Reaktion auf eine Anforderung zum Deregistrieren der SDN-Anwendung, und ein Informieren des Koordinators für Ressourcen auf einer unteren Controller-Ebene, entsprechende Ressourcen freizugeben.

10. Verfahren nach Anspruch 9, wobei das Verfahren ferner aufweist:
ein Koordinieren von Ressourcen einer Mehrzahl von SDN-Anwendungen gemäß einer Anwendungs-Koordinierungsrichtlinie und eines Koordinierungsalgorithmus, wenn die Mehrzahl von SDN-Anwendungen parallel sind; und
wobei das Verfahren ferner aufweist:
ein Vergleichen einer Mehrzahl von Optionen gemäß einer vorbestimmten Richtlinie, wenn die Mehrzahl von Optionen vorhanden ist, und ein Auswählen von Ressourcen der SDN-Anwendung/-Anwendungen gemäß einem Vergleichsergebnis.

11. Verfahren nach einem der Ansprüche 9 bis 10, wobei das Verfahren ferner aufweist:
ein Simulieren einer SDN-Anwendung, die anfordert, gemäß der Anforderung zur Registrierung der SDN-Anwendung und der angewendeten Ressourcen registriert zu werden, und ein Generieren von Bewertungsdaten der SDN-Anwendung; oder
ein Simulieren einer Situation jeder Option, wenn eine Mehrzahl von Optionen vorhanden ist, und ein Generieren von Bewertungsdaten der Mehrzahl von Optionen.

12. Verfahren nach Anspruch 8,
wobei ein Kennen und Überwachen der SDN-Anwendung in der SDN-Anwendungsebene aufweist:
ein Kennen einer Situation einer aktuell aufgerufenen SDN-Anwendung, einschließlich einem Bereitstellen von Attribut- und statistischen Informationen der aktuell aufgerufenen SDN-Anwendung; und/oder
ein Überwachen einer Anwendungssituation und eines Anwendungsstatus der SDN-Anwendung, wobei die Anwendungssituation mindestens eines von Folgendem aufweist: eine Gesamtanzahl von Anwendungen, eine Gesamtanzahl von parallelen Anwendungen, eine Anwendungs-Aufrufhäufigkeit und eine Anzahl von Anwendungen in jedem Anwendungsstatus;
und der Anwendungsstatus mindestens eines von Folgendem aufweist: registriert, inaktiv, aktiv, unterbrochen und deregistriert.

## Revendications

1. Système d'intégration, gestion et contrôle d'une application SDN (Software Defined Networking - réseau défini par le logiciel) sur un plan d'application SDN, **caractérisé par** le système comprenant :
un module d'intégration d'application (10) configuré pour intégrer une application SDN sur le plan d'application SDN, dans lequel l'intégration d'une application SDN comprend au moins l'un de l'enregistrement, du désenregistrement et de l'actualisation d'une application SDN et la reconstruction d'une pluralité d'applications SDN pour former de nouvelles applications ;
un module de gestion d'application (20) configuré pour gérer l'application SDN sur le plan d'application SDN, dans lequel le module de gestion d'application (20) comprend une unité de découverte d'application (202), une recherche d'application, une unité d'annonce d'application (204) et une base de données d'applications, dans lequel l'unité de découverte d'application (202) est configurée pour transmettre une requête de recherche d'information d'application d'un utilisateur à la recherche d'application ;
la recherche d'application est configurée pour rechercher des informations d'application enregistrée dans la base de données d'applications en réponse à la requête de recherche d'information d'application en provenance de la découverte d'application et en fonction de l'information de recherche portée par la requête de recherche d'information d'application ;
l'unité d'annonce d'application (204) est configurée pour annoncer des informations relatives à l'enregistrement, au désenregistrement et à l'actualisation ;
un module de contrôle d'application (30) configuré pour avoir connaissance de et surveiller l'application SDN sur le plan d'application SDN.

2. Système selon la revendication 1, dans lequel le module d'intégration d'application (10) comprend :
une unité d'enregistrement d'application (102) configurée pour enregistrer une application SDN sur le plan d'application SDN en réponse à une requête d'enregistrement de l'application SDN et appliquer à un coordinateur du plan contrôleur inférieur de ressources ; et/ou actualiser une application SDN en réponse à une requête d'actualisation de l'application SDN ; et/ou désenregistrer une application SDN du plan d'application SDN en réponse à une requête de désenregistrement de l'application SDN, et informer le coordinateur du plan contrôleur inférieur de libérer des ressources correspondantes.

3. Système selon la revendication 2, dans lequel le module d'intégration d'application (10) comprend en outre :
une unité de coordination d'application (104) configurée pour coordonner des ressources d'une pluralité d'applications SDN en fonction d'une politique de coordination d'application et d'un algorithme de coordination quand la pluralité d'applications SDN sont simultanées.

4. Système selon la revendication 2 ou 3, dans lequel le module d'intégration d'application (10) comprend en outre :
une unité de sélection d'application (106) configurée pour comparer une pluralité d'options en fonction d'une politique prédéterminée quand la pluralité d'options existent, et sélectionner des ressources de l'application/des applications SDN en fonction d'un résultat de comparaison.

5. Système selon la revendication 2, 3 ou 4, dans lequel le module d'intégration d'application (10) comprend en outre :
une unité de simulation d'application (108) configurée pour simuler une application SDN qui demande à être enregistrée en fonction de la requête d'enregistrement de l'application SDN et des ressources appliquées, et générer des données d'évaluation de l'application SDN ; et/ou simuler une situation de chaque option quand une pluralité d'options existent et générer des données d'évaluation de la pluralité d'options.

6. Système selon la revendication 1, dans lequel le module de contrôle d'application (30) comprend :
une unité de connaissance d'application (302) configurée pour avoir connaissance d'une situation d'une application SDN actuellement appelée, incluant la fourniture d'un attribut et d'informations statistiques de l'application SDN actuellement appelée ; et/ou
une unité de surveillance d'application (304) configurée pour surveiller une situation d'application et un statut d'application de l'application SDN, dans lequel la situation d'application comprend au moins l'un de ce qui suit : un nombre total d'applications, un nombre total d'applications simultanées, une fréquence d'appel d'application et un nombre d'applications dans chaque statut d'application ; et le statut d'application comprend au moins l'un de ce qui suit : enregistré, en veille, actif, suspendu et désenregistré.

7. Dispositif d'intégration, gestion et contrôle d'une application SDN, comprenant le système selon l'une quelconque des revendications 1 à 6.

8. Procédé d'intégration, gestion et contrôle d'une application SDN (Software Defined Networking - réseau défini par le logiciel) sur un plan d'application SDN, **caractérisé par** le procédé comprenant :
l'intégration d'une application SDN sur un plan d'application SDN en réponse à une requête d'intégration de l'application SDN, dans lequel l'intégration d'une application SDN comprend au moins l'un de l'enregistrement, du désenregistrement et de l'actualisation d'une application SDN et la reconstruction d'une pluralité d'applications SDN pour former de nouvelles applications (S602) ;
la gestion de l'application SDN sur le plan d'application SDN (S604) ; et
la connaissance de et la surveillance de l'application SDN sur le plan d'application SDN (S606),
dans lequel la gestion de l'application SDN sur la plan d'application SDN comprend :
la recherche d'une application SDN sur le plan d'application SDN en réponse à une requête de découverte de l'application SDN ; ou la recherche de l'application SDN sur le plan d'application SDN et l'affichage d'un résultat de recherche ; et
l'annonce des informations relatives à l'enregistrement, le désenregistrement et l'actualisation de l'application SDN.

9. Procédé selon la revendication 8, dans lequel l'intégration d'une application SDN sur le plan d'application SDN comprend au moins l'un de ce qui suit :
l'enregistrement d'une application SDN sur le plan d'application SDN en réponse à une requête d'enregistrement de l'application SDN et l'application à un coordinateur du plan contrôleur inférieur de ressources ;
l'actualisation d'une application SDN en réponse à une requête d'actualisation de l'application SDN ; et
le désenregistrement d'une application SDN du plan d'application SDN en réponse à une requête de désenregistrement de l'application SDN, et l'information au coordinateur de plan de contrôleur inférieur de libérer des ressources correspondantes.

10. Procédé selon la revendication 9, dans lequel le procédé comprend en outre :
la coordination de ressources d'une pluralité d'applications SDN en fonction d'une politique de coordination d'applications et d'un algorithme de coordination quand la pluralité d'applications SDN sont simultanées, et,
dans lequel le procédé comprend en outre :
la comparaison d'une pluralité d'options en fonction d'une politique prédéterminée quand la pluralité d'options existent, et la sélection de ressources de l'application/des applications SDN en fonction d'un résultat de comparaison.

11. Procédé selon l'une quelconque des revendications 9 à 10, dans lequel le procédé comprend en outre :
la simulation d'une application SDN qui demande à être enregistrée en fonction de la requête d'enregistrement de l'application SDN et des ressources appliquées, et la génération de données d'évaluation de l'application SDN ; ou
la simulation d'une situation de chaque option quand une pluralité d'options existent et la génération de données d'évaluation de la pluralité d'options.

12. Procédé selon la revendication 8,
dans lequel la connaissance et la surveillance de l'application SDN sur le plan d'application SDN comprend :
la connaissance d'une situation d'une application SDN actuellement appelée, incluant la fourniture d'un attribut et d'informations statistiques de l'application SDN actuellement appelée ; et/ou
la surveillance d'une situation d'application et d'un statut d'application de l'application SDN, dans lequel la situation d'application comprend au moins l'un de ce qui suit : un nombre total d'applications, un nombre total d'applications simultanées, une fréquence d'appel d'application et un nombre d'applications dans chaque statut d'application ; et le statut d'application comprend au moins l'un de ce qui suit : enregistré, en veille, actif, suspendu et désenregistré.
